# EUROPEAN PATENT APPLICATION

(11) **EP 1 637 911 A1**
(43) Date of publication of application: **22.03.2006**
(21) Application number: 05255729.5
(22) Date of filing: 15.09.2005
(51) Int. Cl.: G02B 7/10, G02B 15/16, G02B 27/28

(54) **Drive control apparatus for zoom lens apparatus**

(30) Priority: 15.09.2004 JP 2004268029
(71) Applicant: CANON KABUSHIKI KAISHA, Tokyo (JP)
(72) Inventor: Ozawa, Kazuyoshi, c/o Canon Kabushiki Kaisha, Tokyo (JP)
(74) Representative: Legg, Cyrus James Grahame

(57) **Abstract**

Provided is a drive control apparatus for a zoom lens apparatus which can maintain a focused condition for an object. The drive control apparatus for a zoom lens apparatus is composed of a first lens unit (103) adapted to displace for changing the power, and a second lens unit (105) located nearer to the image side than the first lens unit and adapted to displace for focus adjustment, comprising a control means (112) for controlling the drive of the first lens unit, and further controlling the drive of the second lens unit for maintaining a focused condition in association with the drive of the first lens unit. The control means limits the drive of the first lens unit in an zooming range in which a focused condition by the second lens unit can be maintained.

## Description

### BACKGROUND OF THE INVENTION

### Field of the Invention

The present invention relates to a drive control apparatus for a zoom lens apparatus having an automatic focus adjusting function, which is used in broadcasting equipment, video-cameras or the like.

### Description of the Related Art

A rear focus type zoom lens apparatus in which a focus lens unit is located nearer to the image side than a variable power lens unit has been widely used as an auto-focus type zoom lens apparatus since it can carry out rapid and precise focus control due to use of small-sized and light-weight lenses.

There have been zoom lens assemblies each having four optical powers, that is, a positive power, a negative power, negative power and a positive power, and having a lens unit for auto-focus, which is located nearer to the image side than the variable power lens unit, and a lens unit for manual focus, which is located nearer to the object side than the variable power lens unit (Japanese Utility Model Laid-Open No. 62-43286).

Further, there has been a magnifying power control device which calculates the degree of feed of a focus lens unit from a defocus value which is caused by variation in the object distance, corresponding to this defocus value, for controlling the drive of a zooming optical system (Refer to, for example, Japanese Patent No. 3,077,965 or Japanese Patent No. 3,007,837).

In a rear focus type zoom lens apparatus, since focus drive is carried out in a zone nearer to the image side than the variable power lens unit, it has characteristics such that the degree of feed of the focus lens unit is increased during photography on the telephoto side having an increased zoom ratio or during photography having an object distance which is shorter than the minimum object distance. Thus, during photography having an object distance which is shorter than the minimum object distance (MOD), the degree of feed of a focus lens unit cannot be ensured, depending upon zooming, and accordingly, there has been raised such a problem that a focused condition cannot be maintained even though a stationary object (from which the objective distance does not vary) is being photographed.

It is noted here that Japanese Utility Model Laid-Open No. S62-43286 is mute as to such a fact that the degree of feed of the focus lens unit is limited, depending upon zooming.

As stated above, even in the case of photography of a stationary object, if a focused condition cannot be maintained at a distance shorter than the minimum object distance, the photographed image becomes unsatisfactory.

An additional mechanism for displacing a photographing optical system in its entirety in a direction of the optical axis has to be incorporated in a zoom lens apparatus in order to maintain a focused condition when photography is carried out at an object distance which is shorter than the minimum object distance, resulting in a complicated configuration of the zoom lens apparatus.

### SUMMARY OF THE INVENTION

An object of the present invention is to provide a drive control apparatus for a rear focus type zoom lens apparatus which can maintain a focused condition by limiting the drive range of a variable power lens unit in accordance with the object distance.

According to the present invention, there is provided a drive control apparatus for a zoom lens apparatus comprising a first lens unit adapted to be displaced for changing the power and a second lens unit located nearer to the image side than the first lens unit, and adapted to be displaced for focus adjustment, characterized by a control means for controlling the drive of the first lens unit, and as well controlling the drive of the second lens unit so as to maintain a focused condition in association with the drive of the first lens unit, the control means limiting the drive of the first lens unit to within a zooming range where the second lens can maintain the focused condition.

According to the present invention, a focused condition can be maintained for any object by limiting the drive of the first lens unit in a zooming range in which a focused condition can be maintained by the second lens unit.

Further features of the present invention will become apparent from the following description of exemplary embodiments.

### BRIEF DESCRIPTION OF THE DRAWINGS

FIG. 1 is a view illustrating the configuration of a photographing system in a first embodiment of the present invention;

FIG. 2 is a view illustrating zoom tracking curves;

Fig. 3 is a flow-chart for explaining the operation of the photographing system in the first embodiment;

Fig. 4 is an optical sectional view illustrating a zoom lens apparatus in the first embodiment;

Fig. 5 is a flow-chart for explaining the operation of a photographing system in a second embodiment; and

Fig. 6 is a flow-chart for explaining the operation of a photographing system in a third embodiment.

### DESCRIPTION OF THE EMBODIMENTS

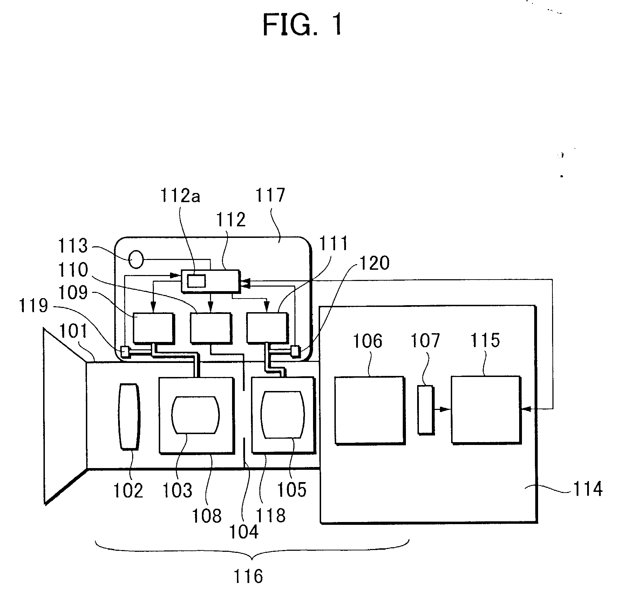

Fig. 1 shows the configuration of a photographing system in a first embodiment of the present invention, there are shown a camera 114 such as a TV camera or a video camera, a zoom lens unit 101 which is removably attached to the camera 114, a drive unit 117 (drive control unit) mounted to the zoom lens apparatus 101, and a photographing system 116, the zoom lens apparatus 101 and the drive unit 117 constituting a lens system.

The zoom lens apparatus 101 is composed of a lens unit 102 which is stationary or is manually displaceable in the direction of the optical axis for focus adjustment, a variable power lens unit 103 (first lens unit) which is displaceable in the direction of the optical axis for changing the power, an aperture unit 104 adjusting the quantity of light, and a focus lens unit (second lens unit) 105 which is displaceable in the direction of the optical axis for automatic focus adjustment.

The photographing optical system is composed of the lens units 102 to 105 and the aperture unit 104. The zoom lens apparatus 101 in this embodiment is of a rear focus type. There are shown a zoom drive mechanism 108 including a cam and the like for driving the variable power lens unit 103 in the direction of the optical axis, and a focus drive mechanism 118 including a cam and a feed screw for driving the focus lens unit 103 in the direction of the optical axis.

It is noted that the zoom drive mechanism 108, the focus drive mechanism 118 and the aperture unit 104 are driven under control by the drive unit 117, and are also manually drivable.

The camera 114 incorporates therein a glass block 106 corresponding to an optical filter or a color separation prism, an imaging element 107, such as a CCD sensor or a CMOS sensor, for photoelectric conversion of the objective image formed by the photographing optical system in the zoom lens apparatus 101, a camera control circuit 115 incorporating a CPU (which is not shown) for carrying out various computations, an image processing circuit for applying various image processes to a signal read from the imaging element 107 so as to produce an image signal, and the like, for controlling the operation of the camera 114.

The drive unit 117 is composed of a lens control circuit (control means) 112 for controlling various operations of the drive unit 117, the lens control circuit 112 including therein a CPU (which is not shown) for carrying out various computations, a data memory circuit 112a storing therein a data table for zoom tracking curves which will be described later, and driver circuits (which are not shown) for motors 109, 111 which will be described later. The lens control circuit 112 is able to communicate with the camera control circuit 115.

The zoom tracking curve data exhibits the relationship between zoom positions in the entire zoom range of the variable power lens unit 103 and focus positions of the focus lens unit 105 which are required to maintain a focused condition for the respective zoom positions.

In this embodiment, the data memory circuit (memory means) 112a stores zoom tracking curve data as to the focus drive positions of the focus drive mechanism (that is, focus positions of the focus lens unit 105) against zoom drive positions of the zoom drive mechanism 108 (that is, zoom positions of the variable power lens unit 103).

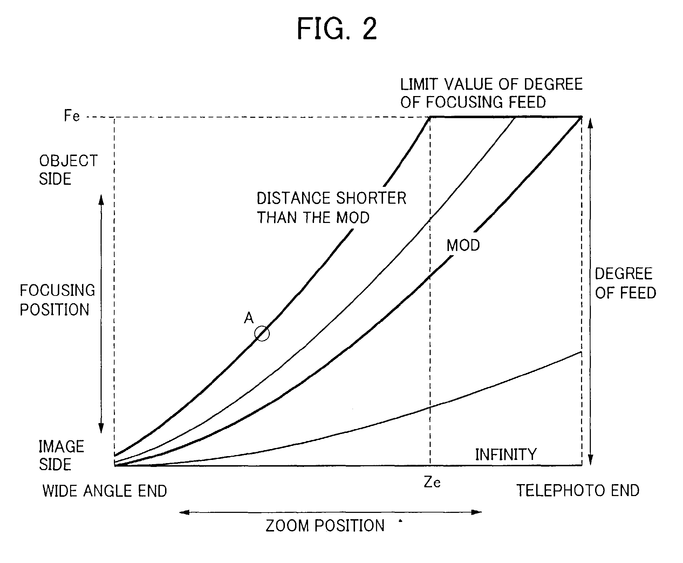

Fig. 2 schematically shows zoom tracking curve data, zoom positions of the variable power lens unit 103 being taken along the abscissa while focus positions of the focus lens unit are taken along the ordinate. In this figure, data at the infinite object distance, data at the minimum object distance and data at a distance shorter than the minimum object distance are shown. The relationship between the zoom position exhibited by the zoom tracking curve data, the object distance and the focus position is invariable, irrespective of the camera 114 mounted thereto with the zoom lens 101.

In the case of the zoom position which is on the wide-angle side, the in-focus position (position at which a focused condition can be maintained) does not appreciably differ between the infinity object distance and a near distance shorter than the minimum object distance. However, as the zoom position approaches the telephoto end, the in-focus position differs largely as regards the infinity object distance, the minimum object distance and a near distance shorter than the minimum object distance.

Meanwhile, the displacement of the focus lens unit 105 (the degree of focusing feed) is limited by the displaceable end setting (a mechanical end or a control end which is set at a position inward from the mechanical end in a displaceable range) which corresponds to a displaceable limit. In such a case that the zoom position is at the telephoto end and object distance is the minimum object distance, the degree of focusing extension becomes maximum.

It is noted here that when the object distance is shorter than the minimum object distance, should the zooming be made from the wide-angle side to the telephoto side, the degree of focusing extension would reach a limit value at a particular zoom position even before it reaches the telephoto end. This fact can be inferred from the zoom tracking curves that have been stored beforehand in the data memory circuit 112a.

In this embodiment, when the degree of focusing feed comes to the limit value, the zoom drive mechanism 108 (which incorporates the zoom motor 109 which will be described later) is driven under control in order to cause the variable power lens unit 103 to come to a stop at a zoom position corresponding to the limit value. That is, it is prevented from displacing beyond a zoom position corresponding to the above-mentioned limit value. By limiting the displacement range of the variable power lens unit 103 as such, a focused condition can be maintained for a stationary object at any object distance.

There are shown the zoom motor 109 adapted to be operated in response to a drive signal from the lens control circuit 112, for driving the zoom drive mechanism 108 in the zoom lens apparatus 101, and a focus motor 111 adapted to be operated in response to a drive signal from the lens control circuit 112, for driving the focus drive mechanism 118.

The drive unit 117 incorporates therein a zoom position detector (first detecting means) 119 for detecting the drive position of the zoom drive mechanism 108, which has an encoder, a potentiometer and the like connected to the zoom drive mechanism 108. A detection signal from the zoom position detector 119 is delivered to the lens control circuit 112.

The lens control circuit 112 controls the drive of the focus motor 111 in accordance with a detection signal (data indicating the zoom position) from the zoom position detector 119 and the zoom tracking curve data. With this configuration, the focused condition can be automatically maintained over the entire zoom range as stated above.

Further, the drive unit 117 is provided therein with a focus position detector 120 for detecting the drive position of the focus drive mechanism 118 which has an encoder, a sensor and the like which are connected to the focus drive mechanism 118. A detection signal from the focus position sensor 120 is delivered to the lens control circuit 112.

There are shown an aperture drive circuit 110 for driving the aperture unit 104 in the zoom lens apparatus 101 in response to a drive signal from the lens control circuit 112, and a macro-photography switch 113 which is manipulated by the operator in order to instruct the execution of photography when the object distance is shorter than the minimum object distance. A manipulation signal from the macro-photography switch 113 is delivered to the lens control circuit 112 which therefore carries out control in accordance with the manipulation signal. That is, the lens control circuit 112 controls the zoom position and the focus position in accordance with the zoom tracking curve data at an object distance which is shorter than the minimum object distance.

In the photographing system in this embodiment, the displaceable range of the variable power lens unit 103 is limited as will be explained hereinbelow.

At first, the zoom position detector 119 detects the drive position of the zoom drive mechanism 108 (that is, the zoom position of the various power lens unit 103). The focus position detector 120 detects the drive position of the focus drive mechanism 118 (that is, the focus position of the focus lens unit 105).

Next, position data detected by the zoom position detector 119 and the focus position detector 120 are verified with the zoom tracking data which has been previously stored in the data memory circuit 112a. That is, particular one of the zoom tracking curves in accordance with the object distance, as shown in Fig. 2, on which both detected zoom and focus positions are located is determined.

By specifying a zoom tracking curve, the zoom position in accordance with a limit value of the degree of focusing feed can be determined in the case of displacement of the variable power lens unit 103 from the wide-angle side to the telephoto side. If the detected zoom and focus positions are located at a point A in Fig. 2, the zoom tracking curve at an object distance which is shorter than the minimum object distance, is specified. Accordingly, a zoom position Ze corresponding to a limit value of the degree of focusing feed is determined.

In such a case that the variable power lens unit 103 is displaced from the wide-angle side to the telephoto side, if the zoom position detected by the zoom position detector 119 comes to a position corresponding to a limit value of the degree of focusing feed, the drive of the focus drive motor 11 is stopped so as to cease the drive of the zoom drive mechanism 108 (that is, the variable power lens unit 103).

In such a case that the zoom tracking curve at an object distance which is shorter than the minimum object distance is specified, if the zoom position detected by the zoom position detector 119 comes to a zoom position Ze (Refer to Fig. 2), the variable power lens unit 103 is inhibited from displacing toward the telephoto side beyond the zoom position Ze. By inhibiting zooming, a focused condition can be maintained continuously for an object located at a given distance from the camera 101.

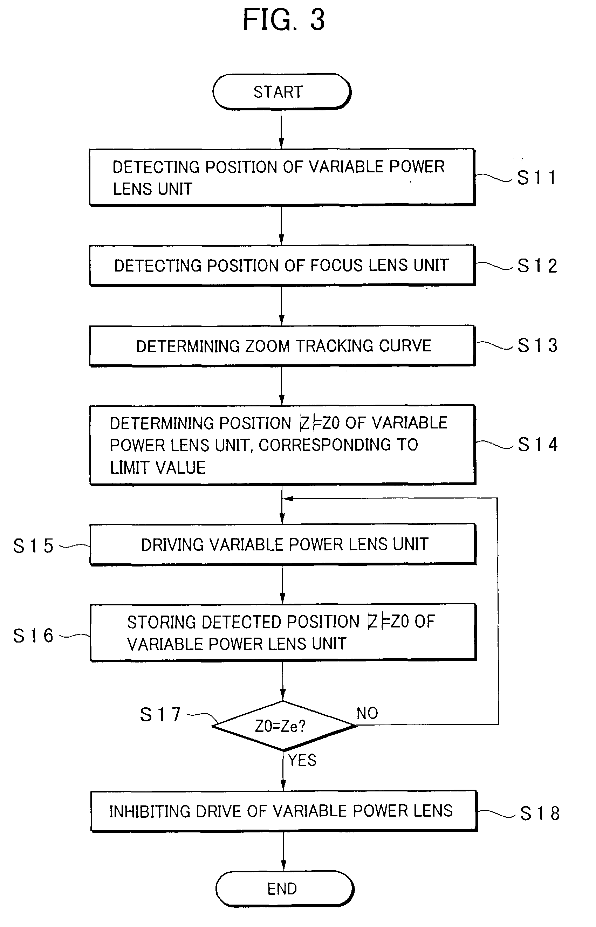

Referring to Fig. 3 which shows a flow-chart in the case of the operation as stated above in the lens control circuit 112. At step 11 (a step is indicated by S in the figure), the zoom position of the variable power lens unit 103 is detected by the zoom position detector 119, and the detection signal is delivered to the lens control circuit 112. At step 12, the focus position of the focus lens unit 105 is detected by the focus position detector 120, and the detection signal is delivered to the lens control circuit 112.

At step 13, one of the zoom tracking curves which have been stored beforehand in the data memory circuit 112a is determined corresponding to the zoom and focus positions detected at steps 11, 12.

At step 14, the zoom position corresponding to a limit value of the degree of focusing feed is determined from the zoom tracking data which has been determined at step 13. At this stage, the data as to the determined zoom position is set to |Z| = Ze which is then stored in the data memory circuit 112a. At step 15, the lens control circuit 112 which has received instructions for zooming drives the zoom drive motor 109 so as to displace the variable power lens unit 103 in the direction of the optical axis by means of the zoom drive circuit 103.

Further, the lens control circuit 112 drives the focus motor 11 so as to displace the focus lens unit 105 in the direction of the optical axis by means of the focus drive mechanism 118. That is, the focus position is controlled in accordance with the detected zoom position in view of the zoom tracking curve specified at step 13.

At step 16, the present zoom position is detected by the zoom position detector 119, and the data relating to the detected zoom position is set to |Z|=Z0 which is then stored in the data memory circuit 112a.

At step 17, whether the zoom position Z0 detected at step 16 comes to the zoom position Ze or not is determined. If it does not come to the zoom position Ze, again at step 15, the drive of the variable power lens unit 103 is continued until the instructions for zooming are released.

Meanwhile, if the zoom position Z0 comes to the zoom position Ze, at step 18, the drive of the zoom drive motor 109 is stopped so as to stop the variable power lens unit 103 at the zoom position Ze.

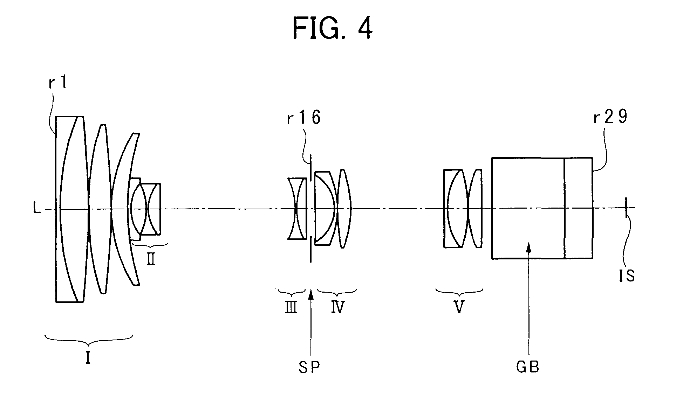

Next, explanation will be made of a specific configuration of the zoom lens apparatus 101 in this embodiment. Table 1 shows numerical characteristics of the zoom lens apparatus in this embodiment while Fig. 4 is an optical sectional view illustrating the zoom lens apparatus 101 having the optical characteristics shown in Table 1.

**[Table 1]**

| f= 7.59989 fno=1:1.52 2ω= 55.5 | | | | |
|---|---|---|---|---|
| r 1= | 1169.481 | d 1= 2.40 | n 1=1.81265 | ν 1= 25.4 |
| r 2= | 98.429 | d 2= 10.83 | n 2=1.51825 | ν 2= 64.2 |
| r 3= | -265.170 | d 3= 0.20 | | |
| r 4= | 124.037 | d 4= 8.29 | n 3=1.60548 | ν 3= 60.7 |
| r 5= | -281.395 | d 5= 0.20 | | |
| r 6= | 51. 797 | d 6= 6.46 | n 4=1.64254 | ν 4= 60.1 |
| r 7= | 97.915 | d 7=variable | | |
| r 8= | 71.045 | d 8= 0.90 | n 5=1. 82017 | ν 5= 46.6 |
| r 9= | 17.601 | d 9= 6.01 | | |
| r10= | -21.542 | d10= 0.90 | n 6=1. 77621 | ν 6= 49.6 |
| r11= | 18.397 | d11= 4.63 | n 7=1.85501 | ν 7= 23.9 |
| r12= | -4295. 134 | d12=variable | | |
| r13= | -27.245 | d13= 0.90 | n 8=1. 79013 | ν 8= 44.2 |
| r14= | 31.613 | d14= 3.84 | n 9=1.85501 | ν 9= 23.9 |
| r15= | 1125.345 | d15=Variable | | |
| r16= | 0.000(stop) | d16=1.60 | | |
| r17= | 10000.000 | d17= 8.10 | n10=1.61671 | ν10= 55.0 |
| r18= | -15.601 | d18= 1.20 | n11=1.82017 | ν11= 46.6 |
| r19= | -37.306 | d19= 0.20 | | |
| r20= | 110.820 | d20= 5.22 | n12=1.62508 | ν12= 53.2 |
| r21= | -51.132 | d21=Variable | | |
| r22= | 786.500 | d22= 1.20 | n13=1.81264 | ν13= 25.4 |
| r23= | 25.913 | d23= 7.96 | n14=1.66152 | ν14= 50.9 |
| r24= | -77.604 | d24= 0.20 | | |
| r25= | 37.803 | d25= 5.34 | n15=1.66152 | ν15= 50.9 |
| r26= | -1000.000 | d26=Variable | | |
| r27= | 0.000 | d27= 29.00 | n16=1.60718 | ν16= 38. 0 |
| r28= | 0.000 | d28= 11.20 | n17=1.51825 | ν17= 64.2 |
| r29= | 0.000 | | | |

| variable focal distance interval | 7.60 | 45.60 | 78.16 | 96.89 | 111.49 |
|---|---|---|---|---|---|
| d 7 | 0.39 | 40.59 | 46.63 | 48.50 | 49.55 |
| d 12 | 52.91 | 7.76 | 3.56 | 3.40 | 3.78 |
| d 15 | 1.55 | 6.50 | 4.65 | 2.96 | 1.53 |
| d 21 | 37.00 | 37.00 | 37.00 | 37.00 | 37.00 |
| d 26 | 3.80 | 3.80 | 3.80 | 3.80 | 3.80 |

Referring to Fig. 4, there are shown, in the order viewed from the object side (the left side of the figure), a lens unit I which is displaceable in the direction of the optical axis L during manual focus adjustment, a variable power lens unit (first lens unit) II which is displaceable in the direction of the optical axis L for changing a power, a correcting lens unit III for correcting variation of an imaging position, an aperture SP, a stationary lens unit IV, a focus lens unit (second lens unit) which is displaceable in the direction of the optical axis L during automatic focus adjustment, a glass block GB such a color separation prism, and an image surface (a light receiving surface of the imaging element 107) IS. The lens unit I and the stationary lens unit IV are stationary upon power change.

Referring to Table 1, f denotes a focal distance, fno: F-number, w: the half angle of view, r: the radius of curvature of the i-th surface counted from the object side, d: the space between the i-th surface and the i+1-th surface along the optical axis, and n and v: the refractive index and the Abbe's number of the medium between the i-th surface and the i+1-th surface.

Table 2 shows a data table for zoom tracking curves of the zoom lens apparatus 101 having the optical characteristics shown in Table 1.

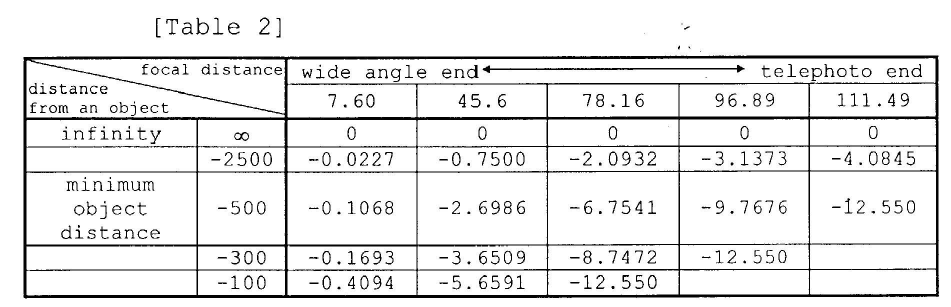

At the telephoto end, when the object distance is the minimum object distance of -500 mm, the degree of focusing feed is -12.550 mm at a maximum. It is found from a zoom tracking curve of a distance of -300 mm from the object, shorter than the minimum object distance, that the limit value of the degree of focusing feed becomes -12.550 mm at a zoom position with a focal distance f = 96.89 mm if the object distance is -300 mm.

Thus, at an object distance of -300 mm, the zoom position is limited in a range from f=7.60 mm to f=96.89 mm of the wide-angle in order to maintain a focused condition for a stationary object.

Similarly, at a near distance of -100 mm which is shorter than the minimum object distance, the zoom position is limited in a zoom range from f=7.60 mm to f=78.16 mm of the wide-angle end.

[Second Embodiment] The second embodiment relates to a photographing system. In this embodiment, the configuration of the photographing system is similar to that in the embodiment 1, and accordingly, like reference numerals are used to denote like parts to those explained in the first embodiment in order to abbreviate the explanation thereto.

In this embodiment, the displaceable range of the variable power lens unit 103 is limited with no determination of a zoom tracking curve.

In the case of zooming by displacing the variable power lens unit 103, the camera control circuit 115 for controlling the operation of the camera 114 causes an image processing circuit to carry out image processing with respect to a signal read from the focus lens unit 105 for obtaining an optimum image so as to produce an image signal. Further, various computations are carried out on the basis of the image signal, and accordingly, a focus position of the focus lens unit 105 at which an optimum image is obtained, that is, a focusing position at which a focused condition can be maintained in response to zooming is calculated.

It is noted that the above-mentioned image signal can be transmitted from the camera control circuit 115 to the lens control circuit 112 in order to calculate a focus position at which the lens control circuit 112 can obtain an optimum image.

The data relating to the focus position calculated in the camera control circuit 115 is transmitted to the lens control circuit 112 which controls the drive of the focus motor 111 in accordance with the data relating to the above-mentioned focus position. Thus, the drive power of the focus motor 111 is transmitted through the focus drive mechanism 118 and to the focus lens unit 105 which displaces up to the above-mentioned focus position. By the drive of the focus lens unit 105 as stated above, the focus lens unit 105 is displaced to the displaceable end setting, and accordingly, if it goes over the displaceable end setting, the lens control circuit 112 interrupts the drive of the zoom drive motor 109 in order to inhibit the drive of the variable power lens unit 103.

By limiting the displaceable range of the variable power lens unit 103 in dependence upon the position of the focus lens unit 105, it is possible to maintain a focused condition for a stationary object in the focused condition.

Explanation will be hereinbelow made of process steps of the above-mentioned operation.

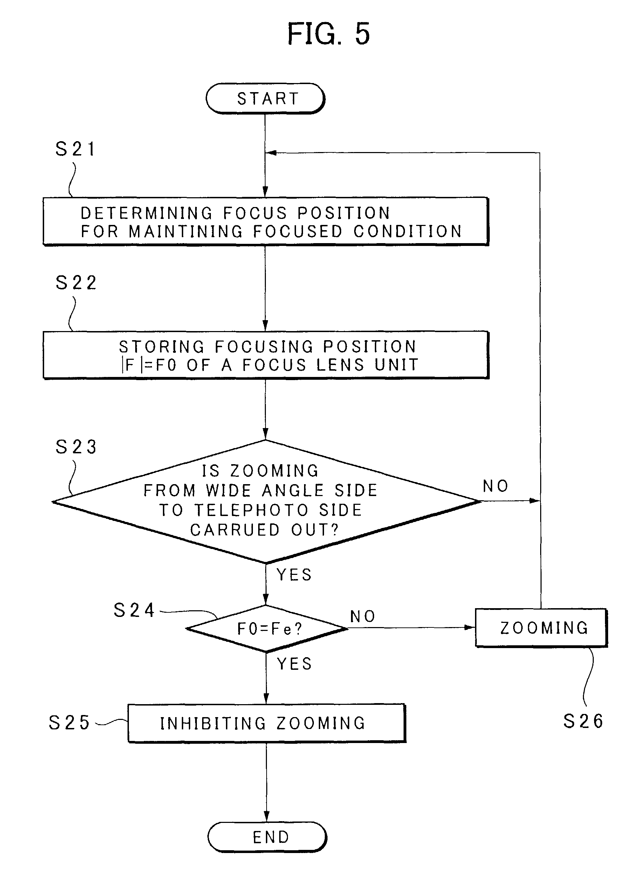

At first, a focus position at which an image obtained from the imaging element 107 becomes optimum, that is, a focus position where a focused position can be maintained even though the zoom position is changed, is computed. If the focus lens unit 105 has already come to the e displaceable end setting so that it is ready to come over the displaceable end setting by further zooming toward the telephoto side, the zooming toward the telephoto side is inhibited. Fig. 5 shows a flow-chart in the case of automatic execution of the above-mentioned operation in the lens control circuit 112.

At step 21, under the above-mentioned computation, a focus position at which an image obtained from an output signal from the imaging element 107 becomes optimum, that is, a focus position where a focused condition depending upon a zoom position can be maintained, is determined. At step 22, data relating the position of feed of the focus lens unit 106 is set to |F| = F0 which is then stored in the data memory circuit 112a.

At step 23, whether the zooming operation from the wide-angle side to the telephoto side is carried out or not is determined, and if zooming is carried out, step 24 is carried out, otherwise step 21 is again carried out.

At step 24, whether the position F0 of feed of the focus lens unit 105 comes to the limit value Fe (Refer to Fig. 2) corresponding to the displaceable end setting of the focus lens unit 105 or not is determined. If the position F0 of feed comes to the limit value Fe, step 25 is carried out, but if it does not comes to the limit value Fe, step 26 is carried out.

At step 25, no drive of the zoom drive motor 10 is carried out in order to inhibit the drive of the variable power lens unit 103. That is, even though zooming is made from the wide-angle side to the telephoto side, zooming cannot be made.

At step 26, the zoom drive motor 109 is driven in response to a zooming operation, zooming is carried out, and then step 21 is again carried out.

[Embodiment 3] Explanation will be made of a photographing system in an embodiment 3 of the present invention. The photographing system in this embodiment is similar to that in the embodiment 1, and accordingly, like reference numerals are used to denote like parts to those in the embodiment 1 in order to abbreviate explanation thereof.

The drive unit 1 1 7 has a manipulating member (which is not shown) for driving a focus lens unit 105. A manipulating signal from the manipulating member is delivered to the lens control circuit 112 which therefore drives the focus lens unit 105 by a degree corresponding to the manipulated value of the manipulating member.

Explanation will be hereinbelow made of the operation in such a case that the focus lens unit 105 is driven under manipulation of the manipulating member, exceeding the displaceable range of the focus lens unit 105.

In this case, at first, the manipulated value of the manipulating member and the zoom position of the variable power lens unit 103 are detected in order to calculate a zoom position at which a focused condition can be maintained with respect to the focus position of the focus lens unit 105. Then, the variable power lens unit 103 is displaced up to the calculated zoom position.

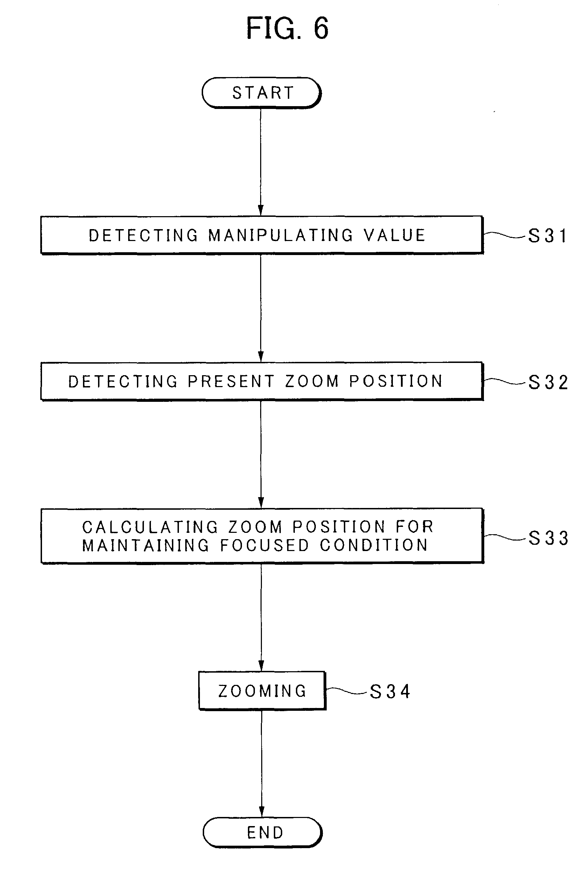

Fig. 6 shows a flow-chart for explaining the above-mentioned operation. This flow-chart is started when an instruction for driving the focus lens unit 105 to come over the displaceable end setting under manipulation of the manipulating member is issued in a condition in which the focus lens unit 108 is located at the displaceable end setting. At step 31, the manipulated value of the manipulating member is detected. At step 32, the present zoom position is detected by the zoom position detector 119.

At step 33, a zoom position at which a focused condition can be maintained is calculated from the manipulated value detected at step 31, that is, the displacement of the focus lens unit 105 and the present zoom position detected at step 32.

At step 34, the drive of the zoom drive motor 109 is controlled so as to displace the variable power lens unit 103 up to the zoom position obtained at step 33.

Explanation will be hereinbelow made of the above-mentioned operation with reference to the above-mentioned Table 2.

When the focused condition is obtained with an object distance which is equal to the minimum object distance of -500 mm at the telephoto end, if the focusing is made so that the object distance becomes a near distance of -300 mm shorter than the minimum object distance, the variable power lens unit II is displaced from f=114.49 to f=96.89 mm in order to maintain the focused condition.

Similarly, when the focusing is made so as to obtain a focused condition with a object distance which is -100 mm, the variable power lens unit II is displaced (zooming) from f=111.49 mm to f=78.16 mm.

As stated above, in a condition in which the focus lens unit 105 is located at the displaceable end setting, when the focus lens unit 105 is to be displaced beyond the displaceable end setting, the variable power lens unit is displaced to a zoom position at which a focused condition can be maintained. Thereby it is possible to maintain a focused condition for an object.

Although the explanation has been made of such a case that the drive of the zoom lens apparatus 101 is controlled by the drive unit 117, there can be provided such a configuration that the drive unit 117 and the zoom lens 101 are integrally incorporated with each other.

According to the present invention, the drive of the first lens unit is limited in a range where a focused condition by the second lens unit can be maintained, thereby it is possible to maintain a focused condition for an object.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A drive control apparatus for a zoom lens apparatus having a first lens unit adapted to displace for changing the power, and a second lens unit located nearer to the image side than the first lens unit and adapted to displace for focus adjustment, **characterized by** a control means for controlling the drive of the first lens unit, and of the second lens unit so as to maintain a focused condition, the control means limiting the drive of the first lens unit to a zoom range in which the focused condition by the second lens unit can be maintained.

2. A drive control apparatus according to claim 1, **characterized in that** the control means stops the drive of the first lens unit when the second lens unit comes to a displaceable end setting.

3. A drive control apparatus according to claim 1 or 2, **characterized by** a memory means storing data indicating positions of the second lens unit in order to maintain a focused condition with respect to the position of the first lens unit, and **characterized in that** the control means limits the drive of the first lens unit in the zooming range in accordance with the data.

4. A drive control apparatus according to claim 3, **characterized by**
a first detection means for detecting the position of the first lens unit, and
a second detection means for detecting the position of the second lens unit,
and **characterized in that** the control means obtains the drive position of the first lens unit corresponding to a or the displaceable end setting of the second lens unit on the data on the basis of results of detection by the first and second detecting means so as to stop the drive of the first lens unit when the first lens unit is driven to the drive position.

5. A drive control apparatus according to claim 1 or 2, **characterized in that** the control means stops the drive of the first lens unit when a focusing position of the second lens unit obtained from an image signal produced from a photographing device comes to a or the displaceable end setting of the second lens unit.

6. A zoom lens system **characterized by** the drive control apparatus and the zoom lens apparatus that are defined in any one of claims 1 to 5.

7. A photographic system **characterized by** the zoom lens system according to claim 6 and an photographing device on which the lens system is mounted.
